# EUROPEAN PATENT APPLICATION

(11) **EP 4 368 441 A1**
(43) Date of publication of application: **15.05.2024**
(21) Application number: 22837394.0
(22) Date of filing: 09.06.2022
(51) Int. Cl.: B60L 15/20, B60L 7/24, B60T 8/1755, B60W 30/02, B60W 40/11

(54) **VEHICLE CONTROL DEVICE, VEHICLE CONTROL METHOD, AND VEHICLE CONTROL SYSTEM**

(30) Priority: 05.07.2021 JP 2021111209
(71) Applicant: Hitachi Astemo, Ltd., Ibaraki 312-8503 (JP)
(72) Inventor: SHINOHARA, Naoki, Hitachinaka-shi, Ibaraki 312-8503 (JP); SUZUKI, Keisuke, Hitachinaka-shi, Ibaraki 312-8503 (JP)
(74) Representative: Hoefer & Partner Patentanwälte mbB
(86) International application number: PCT/JP2022/023303
(87) International publication number: WO 2023/281975

(57) **Abstract**

In a vehicle control device, a vehicle control method, and a vehicle control system according to one embodiment of the present invention, a physical quantity relating to a speed of a vehicle and a physical quantity relating to a requested braking force required to decelerate the vehicle are acquired, and a driving force is generated by a driving device under a state in which a friction braking force is being generated when the vehicle is to be decelerated based on the physical quantity relating to the requested braking force.

## Description

### TECHNICAL FIELD

The present invention relates to a vehicle control device, a vehicle control method, and a vehicle control system.

### BACKGROUND ART

In Patent Literature 1, there is disclosed a braking control device including means for determining a control amount of a friction braking device based on a target friction braking amount calculated from a requested braking force and a regeneration execution amount, and means for correcting, based on braking energy absorbed by friction braking from an operation start time of this friction braking, the control amount of the friction braking device such that the target friction braking amount and an actual friction braking amount match each other.

### CITATION LIST

### PATENT LITERATURE

PTL 1: JP 2008-120220 A

### SUMMARY OF INVENTION

### TECHNICAL PROBLEM

However, in Patent Literature 1, a correction coefficient for a change in a pad temperature set in advance is determined by referring to a map of the correction coefficient, and hence there is a fear in that the correction coefficient may not accurately be obtained when a situation changes.

In this case, as an example of vehicle control, there is conceivable such a configuration that a driving force in an opposite direction to that of a target braking force is generated at a moment of stopping a vehicle, to thereby smooth the moment of stopping. However, when the target braking force cannot accurately be obtained due to the change in braking characteristic as a result of a temperature change, a difference between the target braking force and an actual braking force becomes larger, resulting in a fear in that the vehicle may not smoothly stop.

### SOLUTION TO PROBLEM

One object of the present invention is to provide a vehicle control device, a vehicle control method, and a vehicle control system which are capable of increasing smoothness at a moment of stopping a vehicle in vehicle control of generating a driving force in an opposite direction to that of a target braking force at the moment of stopping the vehicle.

In a vehicle control device, a vehicle control method, and a vehicle control system according to one embodiment of the present invention, a physical quantity relating to a speed of a vehicle is acquired, a physical quantity relating to a target braking force required to decelerate the vehicle is acquired, a physical quantity relating to a behavior of the vehicle is acquired when the vehicle is to be decelerated based on the physical quantity relating to the target braking force, and a control command to be output in order to generate a driving force by a driving device under a state in which a friction braking force is being generated is corrected based on the physical quantity relating to the behavior of the vehicle.

According to the one embodiment of the present invention, the smoothness at the moment of stopping the vehicle can be increased.

### BRIEF DESCRIPTION OF DRAWINGS

Fig. 1 is a configuration diagram of an electric vehicle control system according to a first embodiment of the present invention.
Fig. 2 is a control block diagram of a vehicle control device (17) for executing anti-jerk control.
Fig. 3 is a control block diagram of a torque insufficiency determination unit (33).
Fig. 4 is a control block diagram of a maximum jerk threshold value determination unit (331).
Fig. 5 is a control block diagram of a maximum jerk detection unit (332).
Fig. 6 is a control block diagram of a torque excess determination unit (34).
Fig. 7 is a control block diagram of a correction gain calculation unit (35).
Fig. 8 is a plus correction step size map at the time when a maximum jerk threshold value is a first threshold value X1.
Fig. 9 is a plus correction step size map at the time when the maximum jerk threshold value is a second threshold value X2.
Fig. 10 is a minus correction step size map.
Fig. 11 is a time chart for showing an operation of the torque insufficiency determination unit (33).
Fig. 12 is a time chart for showing an operation of the torque excess determination unit (34).
Fig. 13 is a time chart for showing an operation of the correction gain calculation unit (35).
Fig. 14 is a time chart for showing an operation of the anti-jerk control at the time when a target braking force is smaller than an actual braking force.
Fig. 15 is a time chart for showing an operation of the anti-jerk control at the time when the target braking force is larger than the actual braking force.

### DESCRIPTION OF EMBODIMENTS

### [First Embodiment]

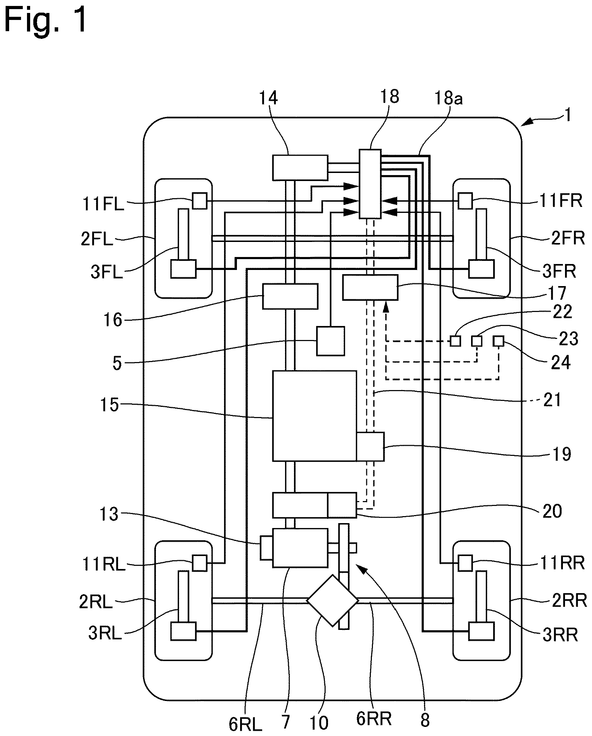

Fig. 1 is a configuration diagram of an electric vehicle control system according to a first embodiment of the present invention.

An electric vehicle 1 includes front wheels 2FL and 2FR, rear wheels 2RL and 2RR, and friction brakes (friction braking device) 3FL, 3FR, 3RL, and 3RR (the friction brake for each wheel is hereinafter also generally referred to as "friction brake 3 ") each of which is provided to one of wheels, and generates a friction braking force on the wheel.

The electric vehicle 1 includes a rear motor (driving device) 7 which outputs torques to the rear wheels 2RL and 2RR. The rear wheels 2RL and 2RR are also generally referred to as "driving wheels 2." A power transmission between the rear motor 7 and the rear wheels 2RL and 2RR is executed through a speed reducer 8, a differential 10, and rear axles 6RL and 6RR.

The wheels 2FL, 2FR, 2RL, and 2RR include wheel speed sensors (speed acquisition unit) 11FL, 11FR, 11RL, and 11RR which detect wheel speeds, respectively. The rear motor 7 includes a rear wheel resolver (speed acquisition unit) 13 which detects the motor rotation number. Moreover, the electric vehicle 1 includes a G sensor (vehicle behavior acquisition unit) 5 which detects an acceleration in a front-rear direction of the vehicle.

The friction brake 3 presses brake pads against a brake rotor which rotates integrally with each wheel in a rotation axis direction of the wheel, to thereby generate a braking force through use of a friction force. As the friction brake 3 in the first embodiment, description is given of a configuration in which the brake pads are pressed by a wheel cylinder operated through use of a brake hydraulic pressure, but the friction brake 3 may have such a configuration that the brake pads are pressed though use of a ball screw mechanism driven by an electric motor or the like, and is not particularly limited.

The electric vehicle 1 includes a low-voltage battery 14 and a high-voltage battery 15. The low-voltage battery 14 is, for example, a lead storage battery. The high-voltage battery 15 is, for example, a lithium ion battery or a nickel-hydrogen battery. The high-voltage battery 15 is charged by electric power boosted by a DC-DC converter 16.

The electric vehicle 1 includes a vehicle control device (control unit) 17, a brake control device (target braking force calculation unit) 18, a rear motor control device 20, and a battery control device 19. The respective control devices 17, 18, and 20 mutually share information through a CAN bus 21.

The vehicle control device 17 acquires information from various types of sensors such as the rear wheel resolver 13, an accelerator pedal sensor 22 which detects an accelerator operation amount, a brake sensor 23 which detects a brake operation amount, and a gear position sensor 24, to thereby execute integrated control for the vehicle. The vehicle control device 17 outputs a driver requested torque to be output by the rear motor 7 based on a requested distribution torque for a requested torque based on the accelerator operation and the brake operation by a driver and the like.

The brake control device 18 acquires information from various types of sensors such as the brake sensor 23 to set a target braking force for the vehicle, generates a brake hydraulic pressure required for each wheel in accordance with the target braking force, and outputs the brake hydraulic pressure to the friction brakes 3 via hydraulic pipes 18a.

The battery control device 19 monitors a charge/discharge state of the high-voltage battery 15 and monitors single battery cells forming the high-voltage battery 15. The battery control device 19 calculates a battery requested torque limit value based on the charge/discharge state of the high-voltage battery 15 and the like. The battery requested torque limit value is the maximum torque allowed in the rear motor 7. For example, when a charging amount of the high-voltage battery 15 is becoming smaller, the battery requested torque limit value is to be set to a smaller value than a normal value.

The rear motor control device 20 controls electric power to be supplied to the rear motor 7 based on a rear requested torque.

In the electric vehicle 1 in the first embodiment, anti-jerk control is executed. The anti-jerk control aims to suppress uncomfortable vibration at a time of vehicle stop, to thereby reduce fatigue of an occupant, and outputs a torque corresponding to an actual braking force at the time of vehicle stop from the rear motor 7. As a result, a front-rear jerk which occurs at the time of vehicle stop at a constant brake operation amount can be reduced by about 68% compared with a case without the anti-jerk control. That is, smooth vehicle stop can be achieved even without a skillful brake operation. In the anti-jerk control, under an assumption that the target braking force and the actual braking force are at the same level, an anti-jerk control torque being a torque corresponding to the target braking force is output by the rear motor 7.

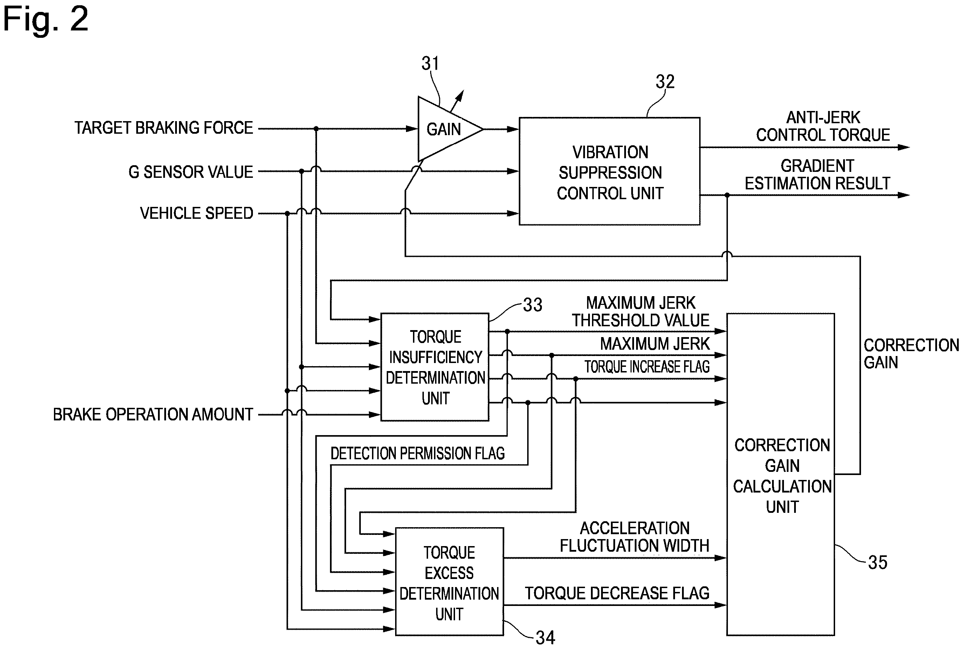

Fig. 2 is a control block diagram of the vehicle control device 17 for executing the anti -j erk control.

A target braking force correction unit 31 receives an input of the target braking force, and outputs a post-correction target braking force obtained by multiplying the target braking force by a gain. The gain is a value obtained by adding a correction gain to an initial gain (for example, 1). The correction gain is calculated by a correction gain calculation unit (driving force correction unit) 35 described later.

A vibration suppression control unit (driving force calculation unit) 32 receives inputs of the post-correction target braking force, a G sensor value, and a vehicle speed, and outputs an anti-jerk control torque and a gradient estimation result (gradient estimation value and gradient resistance estimation value). The G sensor value is an output value of the G sensor 5. The vehicle speed can be calculated from output values of the wheel speed sensors 11 or the rear wheel resolver 13.

The vibration suppression control unit 32 calculates, from the vehicle speed and the G sensor value, the gradient resistance estimation value being a resistance which acts on the vehicle due to a road surface gradient. Specifically, the gradient estimation value is obtained from a deviation between an estimated acceleration calculated from the vehicle speed and the G sensor value (actual acceleration), and the estimated gradient resistance value is calculated from the gradient estimation value. This estimation is executed to avoid an excessive decrease in vehicle deceleration due to a gradient of a downhill at the time of addition of the anti-jerk control torque.

The vibration suppression control unit 32 subtracts a torque corresponding to the gradient resistance from a torque corresponding to the target braking force, to thereby calculate the anti-jerk control torque which can suppress vibration in a pitching direction. The subtraction of the torque corresponding to the gradient resistance is executed to avoid application of an anti-jerk control torque which generates a driving force exceeding the brake braking force.

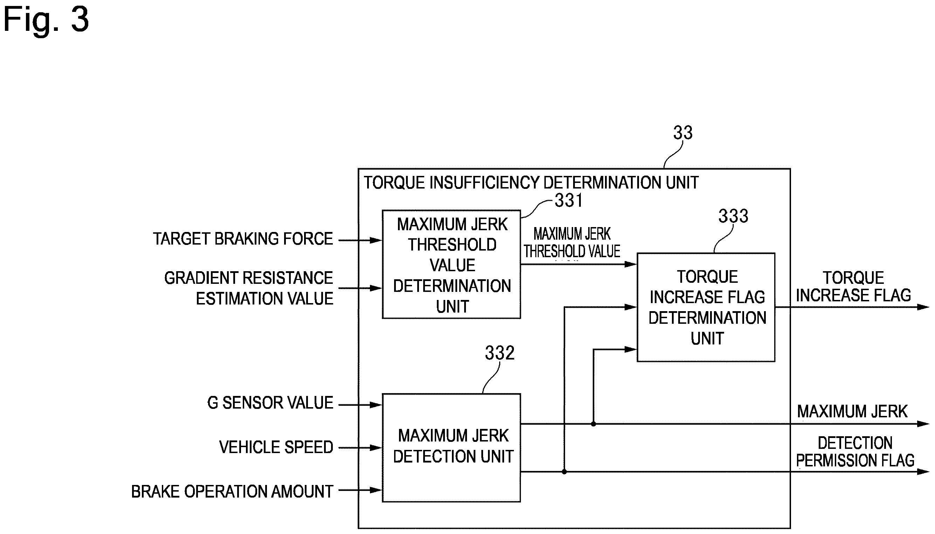

A torque insufficiency determination unit (determination unit) 33 receives inputs of the target braking force, the G sensor value, the vehicle speed, and the brake operation amount, and outputs a maximum jerk threshold value, a maximum jerk, a torque increase flag, and a detection permission flag. Fig. 3 is a control block diagram of the torque insufficiency determination unit 33.

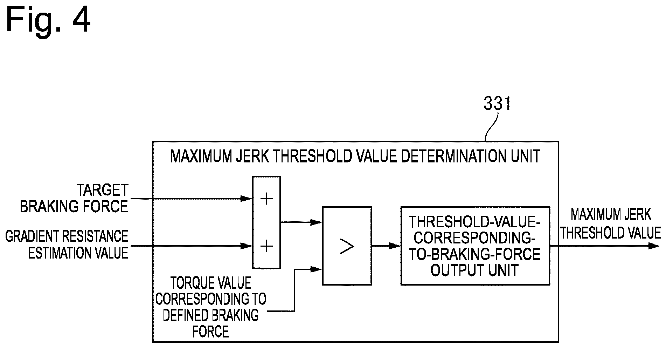

As illustrated in Fig. 4, a maximum jerk threshold value determination unit 331 compares a value obtained by adding the gradient resistance estimation value to the target braking force and a torque value corresponding to a defined braking force with each other, and binarizes a threshold value such that, for example, the threshold value is X1 when an acceleration conversion value of the sum of the target braking force and the gradient resistance estimation value is equal to or larger than -0.1 G, and the threshold value is X2 larger than X1 when the sum is smaller than -0.1 G. However, not only the binarization, but also a map in accordance with the deceleration may be used. Moreover, not only the target braking force and the gradient resistance estimation value, but also an air resistance and a rolling resistance may additionally be considered. Further, the deceleration may be used without using the target braking force and the gradient resistance estimation value, and the determination may be made based on the deceleration.

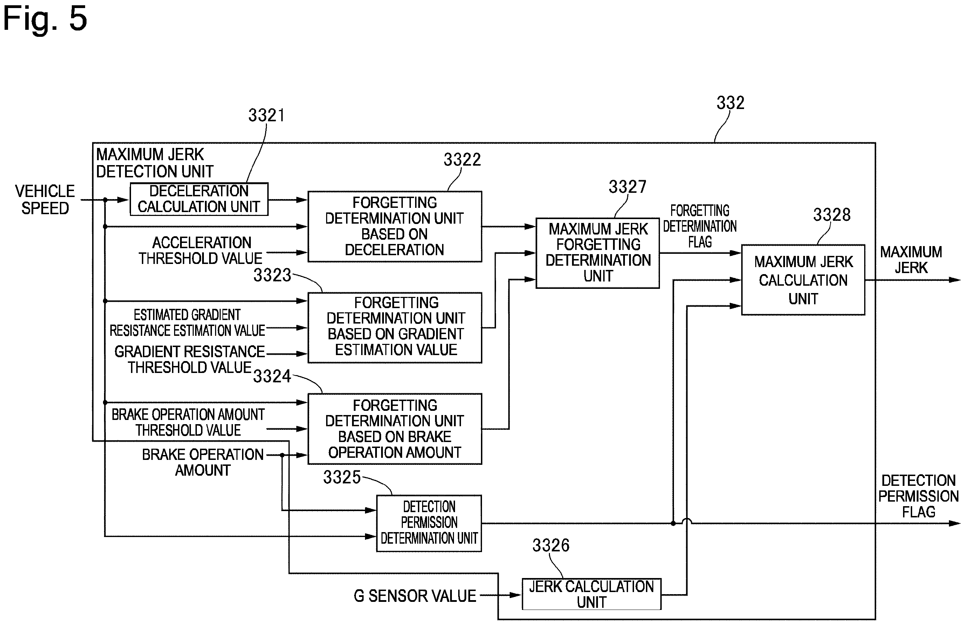

A maximum jerk detection unit 332 receives inputs of the G sensor value, the vehicle speed, and the brake operation amount, and outputs the maximum jerk and the detection permission flag. Fig. 5 is a control block diagram of the maximum jerk detection unit 332.

A deceleration calculation unit 3321 differentiates the vehicle speed, and applies a low-pass filter for noise removal to a resulting derivative, to thereby calculate the deceleration of the vehicle. The G sensor value may be used.

A forgetting determination unit based on deceleration 3322 makes forgetting determination when there is a fear for sudden braking and hence the anti-jerk control may not be executed in a case in which the vehicle speed is equal to or lower than a defined value (moment of stopping), the deceleration exceeds a defined acceleration threshold value, and hence the deceleration is high. When the forgetting determination is once made, the forgetting determination is maintained until the speed reaches the defined speed or higher.

A forgetting determination unit based on gradient estimation value 3323 makes the forgetting determination when the vehicle speed is equal to or lower than the defined speed, and the gradient resistance estimation value is equal to or larger than a gradient resistance threshold value. When the forgetting determination is once made, the forgetting determination is maintained until the speed reaches the defined speed or higher.

A forgetting determination unit based on brake operation amount 3324 makes the forgetting determination when the vehicle speed is equal to or lower than the defined speed and the brake operation amount fluctuates by a value equal to or more than a defined brake operation amount threshold value. The forgetting determination is not made when only release is executed, or unless a depression by a defined amount or more is executed after the release. Moreover, when the forgetting determination is once made, the forgetting determination is maintained until the speed reaches the defined speed or higher.

A detection permission determination unit 3325 sets a detection permission flag to ON when the vehicle speed is equal to or lower than the defined speed and the brake is depressed, and sets the detection permission flag to OFF when a defined time has elapsed since the vehicle stop.

A jerk calculation unit 3326 applies pseudo-differentiation to the G sensor value (or may apply pseudo differentiation to the vehicle speed twice), and further passes the result of the pseudo differentiation through a low-pass filter, to thereby calculate the jerk.

A maximum jerk forgetting determination unit 3327 sets a forgetting flag to ON when the forgetting determination is made in any one of the forgetting determination units. When a determination of setting the forgetting flag to ON is made once, the forgetting determination flag is maintained until the speed reaches the defined speed or higher. The forgetting determination flag is set to OFF when the speed becomes equal to or higher than the defined speed. When the vehicle speed is equal to or lower than the defined speed, and a steering amount is equal to or more than a predetermined amount, or when a road is determined to be a rough road, the forgetting determination may also be made and the forgetting flag may be set to ON.

When the detection permission flag is ON and the forgetting determination flag is OFF, a maximum jerk calculation unit 3328 calculates and holds the maximum jerk in this period. Moreover, when the forgetting determination flag is set to ON, the detected maximum jerk is forgotten, and the maximum jerk is treated as 0 at the vehicle stop for this time. The maximum jerk at the previous time of vehicle stop is forgotten when the detection permission flag is set (when the detection permission flag is switched from OFF to ON), to thereby eliminate influence of the previous detection result.

A torque increase flag determination unit 333 determines whether a torque increase flag TUF is ON or OFF based on a relationship between the maximum jerk and the maximum jerk threshold value after the detection permission flag is reset (when the detection permission flag is switched from ON to OFF). The torque increase flag determination unit 333 sets the torque increase flag TUF to ON when the maximum jerk is equal to or larger than the maximum jerk threshold value, and sets the torque increase flag TUF to OFF when the maximum jerk is smaller than the maximum jerk threshold value.

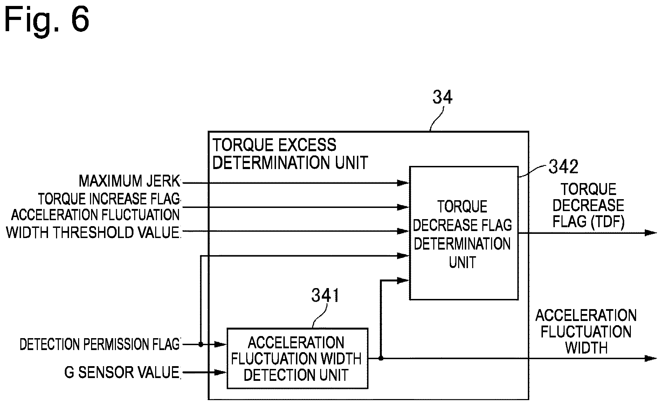

A torque excess determination unit (determination unit) 34 receives inputs of the maximum jerk threshold value, the maximum jerk, the torque increase flag, the detection permission flag, an acceleration fluctuation width threshold value, and the G sensor value, and outputs a torque decrease flag TDF and an acceleration fluctuation width. Fig. 6 is a control block diagram of the torque excess determination unit 34.

An acceleration fluctuation width detection unit 341 holds a maximal value and a minimal value of the G sensor value in a period in which the detection permission flag is set (ON), and calculates and holds, when the detection permission flag becomes OFF, an acceleration fluctuation width after a maximal value appears for the first time within an initial peak search width across a G sensor value at a time at which the detection permission flag becomes OFF (G sensor value at the time at which the detection permission flag becomes OFF±defined width).

A torque decrease flag determination unit 342 determines whether the torque decrease flag TDF is ON or OFF based on a relationship between the acceleration fluctuation width and the acceleration fluctuation width threshold value and a relationship between the maximum jerk and the maximum jerk threshold value after the detection permission flag is reset. The torque decrease flag determination unit 342 sets the torque decrease flag TDF to ON when the torque increase flag TUF is OFF and the acceleration fluctuation width is equal to or wider than the acceleration fluctuation width threshold value and the maximum jerk is not 0, and sets the torque decrease flag TDF to OFF otherwise.

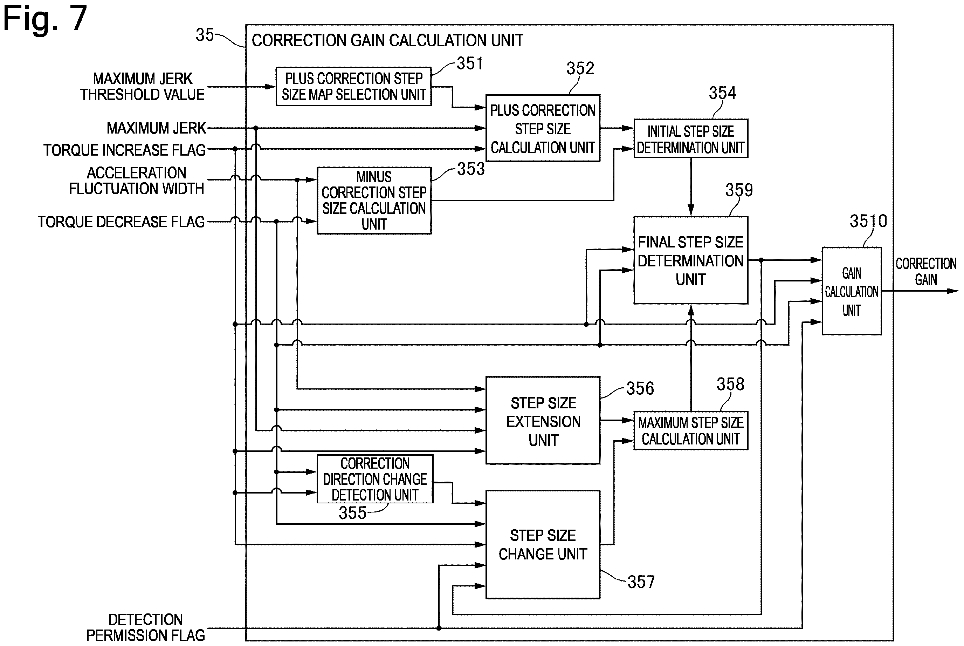

A correction gain calculation unit 35 receives inputs of the maximum jerk threshold value, the maximum jerk, the torque increase flag, the detection permission flag, the acceleration fluctuation width, and the torque decrease flag, and outputs the correction gain. Fig. 7 is a control block diagram of the correction gain calculation unit 35.

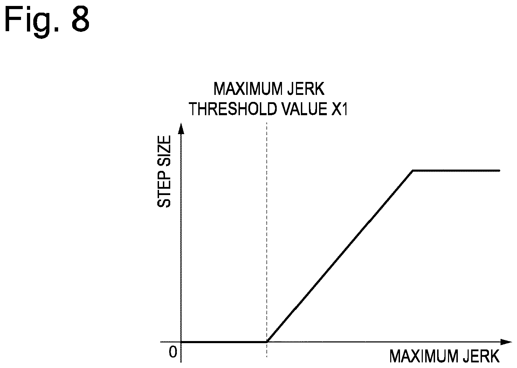

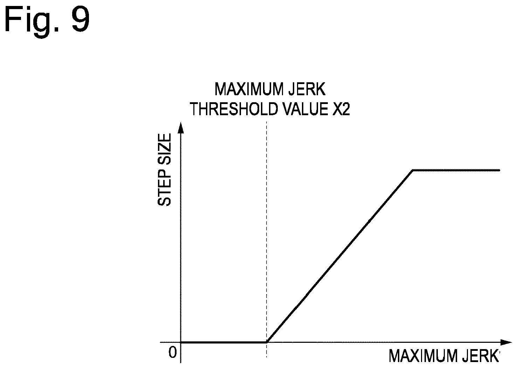

A plus correction step size map selection unit 351 selects a plus correction step size map in accordance with the maximum j erk threshold value. When the maximum jerk threshold value is the first threshold value X1, a map of Fig. 8 is selected. When the maximum jerk threshold value is the second threshold value X2, a map of Fig. 9 is selected. As shown in Fig. 8, a step size is 0 when the maximum jerk is smaller than X1, is proportional to the maximum jerk when the maximum jerk is equal to or larger than X1, and takes the constant maximum value when the maximum jerk exceeds the predetermined value. The same applies to Fig. 9.

A plus correction step size calculation unit 352 refers to the selected plus correction step size map when the torque increase flag TUF is ON, to thereby set the step size (change width of the gain) from the maximum jerk. However, when the torque increase flag TUF is OFF, the step size is set to 0.

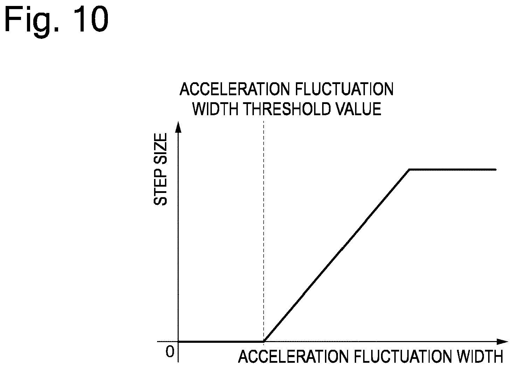

A minus correction step size calculation unit 353 refers to a minus correction step size map of Fig. 10 when the torque decrease flag TDF is ON, to thereby set the step size from the acceleration fluctuation width. However, when the torque decrease flag TDF is OFF, the step size is set to 0. As shown in Fig. 10, the step size is 0 when the acceleration fluctuation width is narrower than the acceleration fluctuation width threshold value, is proportional to the acceleration fluctuation width when the acceleration fluctuation width is equal to or wider than the acceleration fluctuation width, and takes the constant maximum value when the acceleration fluctuation width exceeds the predetermined value.

An initial step size determination unit 354 compares the input plus correction step size and minus correction step size with each other, and outputs one thereof having a larger value as an initial step size.

A correction direction change detection unit 355 stores the torque increase flag TUF or the torque decrease flag TDF which was previously set to ON, to thereby detect the switch from the ON state of the torque increase flag TUF to the ON state of the torque decrease flag TDF or the switch from the ON state of the torque decrease flag TDF to the ON state of the torque increase flag TUF.

A step size extension unit 356 refers to the maximum jerk when the torque increase flag TUF is ON, refers to the acceleration fluctuation width when the torque decrease flag TDF is ON, and outputs a step size determined in advance when each value is larger than a defined value (outputs 0 when each value does not exceed the defined value). The step size extension unit 356 has a function of suppressing influence on learning performance for the gain as a result of the initial step size being small or the step size decreasing as the time elapses due to influence of a step size change unit 357 described below.

The step size change unit 357 outputs the same value as the previous step size when the correction direction remains the same (TUF is ON the previous time→TUF is ON this time or TDF is ON the previous time→TDF is ON this time) and outputs a value of half of the previous step size when the correction direction changes (TUF is ON the previous time→TDF is ON this time or TDF is ON the previous time→TUF is ON this time).

A maximum step size calculation unit 358 selects a larger value of the calculated values of the step size extension unit 356 and the step size change unit 357.

A final step size determination unit 359 outputs the initial step size determined by the initial step size determination unit 354 when the torque increase flag TUF or the torque decrease flag TDF has not been set to ON even once since the vehicle started, and outputs the step size selected by the maximum step size calculation unit 358 when the torque increase flag TUF or the torque decrease flag TDF has been set to ON at least once.

A gain calculation unit 3510 adds the sign of plus to the step size output from the final step size determination unit 359 when the torque increase flag TUF is ON, adds the sign of minus to the step size when the torque decrease flag TDF is ON, and then adds the step size to a sum of gains which have been calculated, to thereby calculate the correction gain. The addition to the sum of the gains having been calculated is executed only once by the time when the detection flag is set to ON the next time after the detection permission flag is switched from ON to OFF.

Actions and effects of the first embodiment are now described.

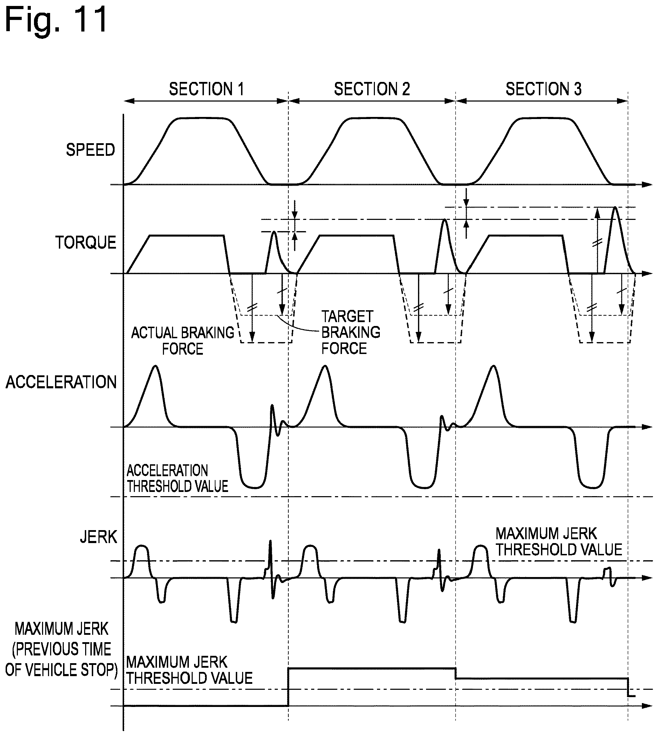

Fig. 11 is a time chart for showing an operation of the torque insufficiency determination unit 33.

In a section 1, the maximum jerk at the time of vehicle stop exceeds the maximum jerk threshold value. In a section 2, the maximum jerk at the previous time of vehicle stop exceeds the maximum jerk threshold value, and hence the anti-jerk control torque is corrected to increase. A section 3 is similar to the section 2, but the anti-jerk control torque becomes a torque corresponding to the actual braking force through the correction of increasing the anti-jerk control torque. Thus, the maximum jerk falls below the maximum jerk threshold value, and hence the learning of the correction gain is not executed at the next time of vehicle stop.

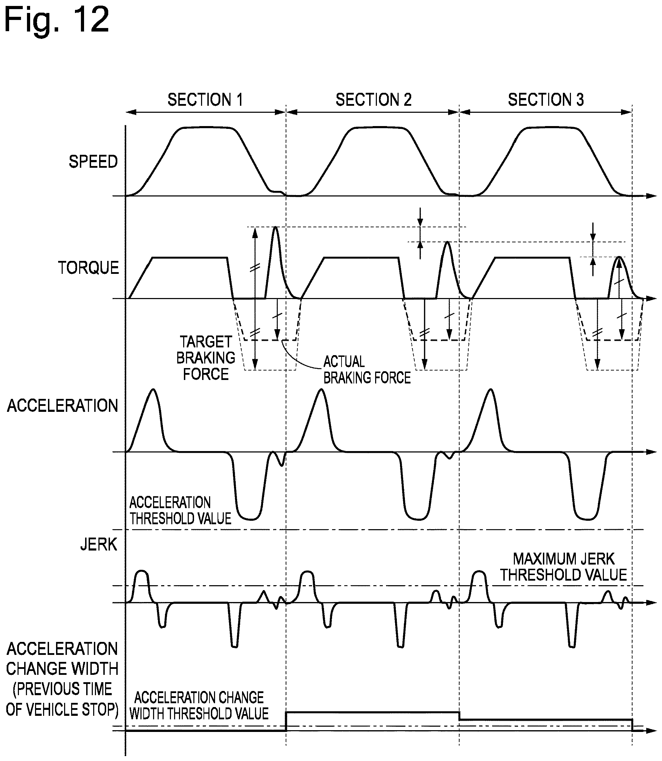

Fig. 12 is a time chart for showing an operation of the torque excess determination unit 34.

In a section 1, the acceleration fluctuation width at the time of vehicle stop exceeds the acceleration fluctuation width threshold value. In a section 2, the acceleration fluctuation width at the previous time of vehicle stop exceeds the acceleration fluctuation width threshold value, and hence the anti-jerk control torque is corrected to decrease. A section 3 is similar to the section 2, but the anti-jerk control torque becomes a torque corresponding to the actual braking force through the correction of decreasing the anti-jerk control torque. Thus, the acceleration fluctuation width falls below the acceleration fluctuation width threshold value, and hence the learning of the correction gain is not executed at the next time of vehicle stop.

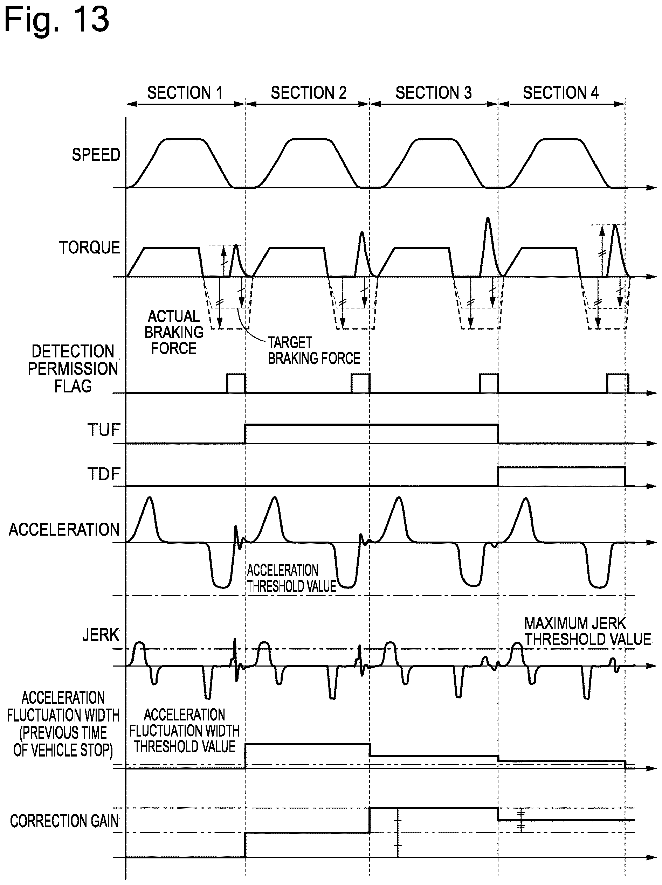

Fig. 13 is a time chart for showing an operation of the correction gain calculation unit 35.

In a section 1, the maximum jerk at the time of vehicle stop exceeds the maximum jerk threshold value, and the torque increase flag TUF is set to ON. The acceleration fluctuation width also exceeds the acceleration fluctuation width threshold value, but the torque increase flag TUF is ON. Thus, the torque decrease flag TDF maintains OFF. In a section 2, the torque increase flag TUF is set to ON for the first time after the vehicle starts, and hence the initial step size output by the initial step size determination unit 354 is used to determine the correction gain. The torque increase flag TUF is ON this time, and hence the sign of the step size is set to plus, to thereby increase the correction gain. In a section 3, the torque increase flag TUF has once been set to ON, and hence the step size selected by the maximum step size calculation unit 358 is used to determine the correction gain. In the section 3, the sign of the correction gain is plus as is in the section 2, and hence the correction gain is increased. In a section 4, the acceleration fluctuation width exceeds the acceleration fluctuation width threshold value, and the torque increase flag TUF is not ON. Thus, the torque decrease flag TDF is set to ON. In the section 4, the correction gain is updated toward the direction different from that in the section 3, and hence the step size is halved, to thereby reduce the correction gain.

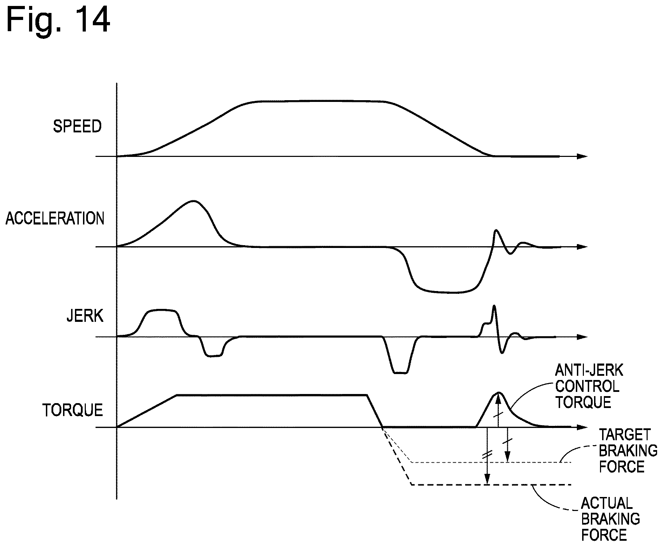

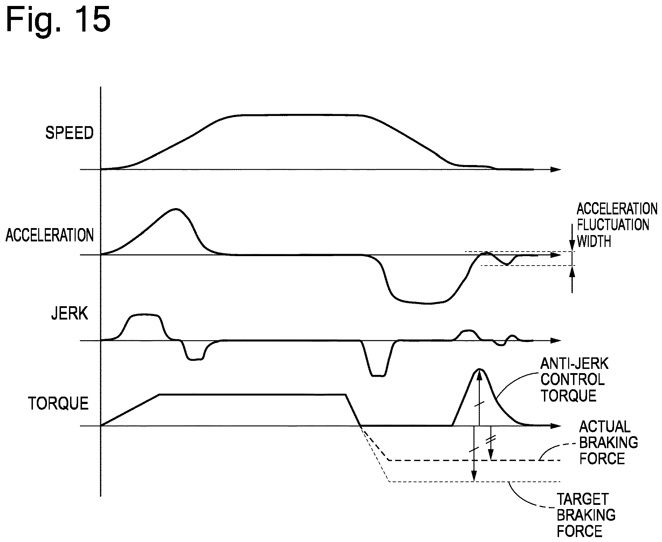

In the anti-jerk control, the torque corresponding to the actual braking force is output by determining the anti-jerk control torque based on the target braking force, to thereby aim for a smooth vehicle stop. In this case, a situation in which the target braking force is equal to the actual braking force is ideal, but a friction coefficient of brake pads actually changes due to temperature fluctuation of the brake pads and the like. A deviation consequently occurs between the target braking force and the actual braking force, and hence there is a fear in that the aimed effect may not be achieved. As shown in Fig. 14, when the target braking force is smaller than the actual braking force, the anti-jerk control torque is insufficient with respect to the actual braking force. As a result, strong shock at the stopping moment occurs. Meanwhile, as shown in Fig. 15, when the target braking force is larger than the actual braking force, the anti-jerk control torque is excessive for the actual braking force, and hence a braking distance becomes longer.

Hitherto, there has been known a method of estimating the deviation between the target braking force and the actual braking force by detecting a temperature change in the brake through use of a sensor and the like. However, a map of a correction coefficient corresponding to the pad temperature change set in advance is used, and hence, when a characteristic of the pad temperature changes due to a secular change of the brake pad and the like, there is a fear in that the correction coefficient may not accurately be obtained. Moreover, a method of estimating a deviation between the target braking force and the actual braking force from a deviation between an estimated deceleration and an actual deceleration is also publicly known. However, in order to calculate the estimated deceleration, it is required to estimate not only the brake braking force but also disturbance such as a vehicle weight and a travel resistance. Thus, it is very difficult to accurately estimate all of those parameters. For example, it is conceivable to calculate the vehicle weight based on a motor torque and the acceleration when the vehicle weight is to be estimated. However, when the acceleration is 0.1 G, and the estimation value of the acceleration deviates by only 0.01 G, an error at a level of about 10% occurs on a vehicle weight basis. Further, it is difficult to accurately estimate the disturbance such as the travel resistance, and hence an error occurs in the estimated deceleration. As a result, it is difficult to estimate the deviation between the target braking force and the actual braking force.

Thus, in the anti-jerk control in the first embodiment, there is used a method of not mathematically estimating the deviation, but detecting the deviation between the target braking force and the actual braking force, which occurs due to the temperature change and the like, from the physical quantities relating to the behavior of the vehicle at the time of vehicle stop, and feeding back the deviation to the anti-jerk control torque. Specifically, the deviation between the target braking force and the actual braking force is learned from the physical quantities relating to the behavior of the vehicle at the time of vehicle stop, and, at the next time of vehicle stop, the gain by which the target braking force is multiplied is corrected in accordance with the learning result in order to increase the smoothness at the moment of stopping when the anti-jerk control torque is determined from the target braking force. Thus, in the vehicle control of generating the driving force (anti-jerk control torque) in the opposite direction to that of the target braking force at the moment of stopping the vehicle, the smoothness at the moment of stopping the vehicle can be increased.

The physical quantities relating to the behavior of the vehicle are the jerk and the acceleration. As shown in Fig. 14 and Fig. 15, as the target braking force is smaller than the actual braking force, a larger jerk occurs at the moment of stopping. Meanwhile, when the target braking force is larger than the actual braking force, the acceleration fluctuation exceeding the predetermined width occurs at the moment of stopping. Thus, the deviation between the target braking force and the actual braking force can more accurately be recognized by observing the jerk and the acceleration at the moment of stopping, and hence appropriate gain correction can be made.

The vehicle control device 17 adds the positive correction gain to the gain by which the target braking force is multiplied, to thereby make the correction to the direction for increasing the anti-jerk control torque when the maximum jerk that has occurred is equal to or larger than the maximum jerk threshold value at the moment of stopping at which the vehicle speed becomes equal to or lower than the defined speed. When the maximum jerk is equal to or larger than the maximum jerk threshold value, the target braking force is in the state of being smaller than the actual braking force. Thus, in such a case, the insufficiency of the anti-jerk control torque with respect to the actual braking force can be suppressed through the correction of increasing the anti-jerk control torque.

The vehicle control device 17 increases the plus correction step size as the maximum jerk increases, to thereby increase the correction toward the direction of the increase in anti-jerk control torque. As the target braking force is smaller than the actual braking force, the maximum jerk occurring at the moment of stopping increases. Thus, the insufficiency of the anti-jerk control torque with respect to the actual braking force can be suppressed through the correction of increasing the anti-jerk control torque more as the maximum jerk is larger.

The vehicle control device 17 changes the magnitude of the maximum jerk threshold value to the first threshold value X1 or the second threshold value X2 (>X1) depending on whether the acceleration equivalent to the sum of the target braking force and the gradient resistance estimation value is equal to or larger than -0.1 G or smaller than -0.1 G. The jerk occurring at the moment of stopping changes in accordance with the target braking force, and hence appropriate gain correction can be made by setting the maximum jerk threshold value corresponding thereto.

The vehicle control device 17 adds the negative correction gain to the gain by which the target braking force is multiplied, to thereby make the correction to the direction for decreasing the anti-jerk control torque when the maximum jerk is equal to or smaller than the maximum jerk threshold value and the acceleration fluctuation width is equal to or wider than the acceleration fluctuation width threshold value at the moment of stopping at which the vehicle speed becomes equal to or lower than the defined speed. When the maximum jerk is equal to or smaller than the maximum jerk threshold value and the acceleration fluctuation width is equal to or wider than the acceleration fluctuation width threshold value, the target braking force is in the state of being larger than the actual braking force. Thus, in such a case, the excessive anti-jerk control torque with respect to the actual braking force can be suppressed through the correction of decreasing the anti-jerk control torque.

The vehicle control device 17 increases the minus correction step size as the acceleration fluctuation width increases, to thereby increase the correction toward the direction of the decrease in anti-jerk control torque. As the target braking force is larger than the actual braking force, the acceleration fluctuation width occurring at the moment of stopping increases. Thus, the excessive anti-jerk control torque with respect to the actual braking force can be suppressed by decreasing the anti-jerk control torque more as the acceleration fluctuation width is wider.

The vehicle control device 17 holds the first step size in the second correction when the direction of the correction is the same between the first correction and the second correction, and sets the step size to the half of the first step size in the second correction when the direction of the correction is different between the first correction and the second correction. For example, when the magnitude of the step size is held in the case of the inversion of the direction of the correction, there is a fear in that the anti-jerk control torque may overshoot the actual braking force, and hence hunting may occur. Thus, the overshoot of the anti-jerk control torque with respect to the actual braking force is suppressed by halving the step size when the direction of the correction is inverted, and hence convergence of the anti-jerk control torque with respect to the actual braking force can be increased.

The vehicle control device 17 treats the maximum jerk as 0 when the deceleration of the vehicle exceeds the acceleration threshold value at the moment of stopping at which the vehicle speed is equal to or lower than the defined speed, when the brake operation amount fluctuates by than the brake operation amount threshold value or more, or when the steering amount is equal to or larger than the predetermined value. As a result, the gain correction is not made. It is preferred to stop the anti-jerk control at a time of sudden deceleration for the purpose of preventing an increase in braking distance, and hence the jerk and the acceleration cannot be suppressed in this case. Thus, it is possible to avoid the execution of an inappropriate gain correction (erroneous gain learning) by avoiding the execution of the gain correction at the time of sudden braking. Moreover, the fluctuation in jerk and acceleration occurs also at a time of further depression of the brake and at a time of steering, and hence the execution of an inappropriate gain correction can be avoided by avoiding the execution of the gain correction also in this case.

### [Other Embodiments]

The embodiment of the present invention has been described above. However, the specific configuration of the present invention is not limited to the configuration described in the embodiment. A modification in design without departing from the scope of the gist of the invention is also encompassed in the present invention.

For example, in this embodiment, the configuration of the present invention is applied to the rear-wheel-drive electric vehicle, but may be applied to a front-wheel-drive electric vehicle or a four-wheel-drive electric vehicle. Moreover, the vehicle is not limited to the electric vehicle, and may be a vehicle including an engine which is an internal combustion engine or a hybrid vehicle which can travel through use of both an engine and a motor.

The target braking force includes that of automatic braking and the like in addition to that of the brake operation of the driver.

Note that, the present invention is not limited to the above-mentioned embodiment, and includes further various modification examples. For example, in the above-mentioned embodiment, the configurations are described in detail in order to clearly describe the present invention, but the present invention is not necessarily limited to an embodiment that includes all the configurations that have been described. Further, a part of the configuration of a given embodiment can replace the configuration of another embodiment, and the configuration of another embodiment can also be added to the configuration of a given embodiment. Further, another configuration can be added to, deleted from, and replace a part of the configuration of each of the embodiments.

The present application claims a priority based on Japanese Patent Application No. 2021-111209 filed on July 5, 2021. All disclosed contents including Specification, Scope of Claims, Drawings, and Abstract of Japanese Patent Application No. 2021-111209 filed on July 5, 2021 are incorporated herein by reference in their entirety.

### REFERENCE SIGNS LIST

1 electric vehicle, 2 driving wheel, 3 friction brake (friction braking device), 5 G sensor (vehicle behavior acquisition unit), 7 rear motor (driving device), 11 wheel speed sensor (speed acquisition unit), 13 rear wheel resolver (speed acquisition unit), 17 vehicle control device (control unit), 18 brake control device (target braking force calculation unit), 32 vibration suppression control unit (driving force calculation unit), 33 torque insufficiency determination unit (determination unit), 34 torque excess determination unit (determination unit), 35 correction gain calculation unit (driving force correction unit)

## Claims

1. A vehicle control device, which is provided in a vehicle including a friction braking device configured to generate a friction braking force in the vehicle and a driving device configured to generate a driving force in the vehicle,
the vehicle control device comprising a control unit configured to output a result of calculation based on input information,
wherein the control unit is configured to:
acquire a physical quantity relating to a speed of the vehicle;
acquire a physical quantity relating to a target braking force required to decelerate the vehicle;
acquire a physical quantity relating to a behavior of the vehicle when the vehicle is to be decelerated based on the physical quantity relating to the target braking force; and
correct, based on the physical quantity relating to the behavior of the vehicle, a control command to be output in order to generate the driving force by the driving device under a state in which the friction braking force is being generated.

2. The vehicle control device according to claim 1, wherein the physical quantity relating to the behavior of the vehicle is a jerk or an acceleration.

3. The vehicle control device according to claim 2, wherein the control unit is configured to correct the control command toward a direction for increasing the driving force based on a maximum value of the jerk when the maximum value of the jerk at a time when the physical quantity relating to the speed falls below a predetermined speed is equal to or larger than a predetermined threshold value.

4. The vehicle control device according to claim 3, wherein the control unit is configured to increase a correction amount toward the direction for increasing the driving force as the maximum value of the jerk increases.

5. The vehicle control device according to claim 3, wherein the control unit is configured to change a magnitude of the threshold value based on a magnitude of the target braking force.

6. The vehicle control device according to claim 2, wherein the control unit is configured to correct the control command toward a direction for reducing the driving force based on a fluctuation width of the acceleration when a maximum value of the jerk at a time when the physical quantity relating to the speed falls below a predetermined speed is smaller than a predetermined threshold value and the fluctuation width of the acceleration exceeds a predetermined fluctuation range.

7. The vehicle control device according to claim 6, wherein the control unit is configured to increase a correction amount toward the direction for reducing the driving force as the fluctuation width of the acceleration increases.

8. The vehicle control device according to claim 1, wherein the control unit is configured to:
correct, when a first correction and a second correction are the same in direction of the correction, the control command such that a magnitude of the second correction is the same as a magnitude of the first correction; and
correct, when the first correction and the second correction are different in direction of the correction, the control command such that the magnitude of the second correction is half of the magnitude of the first correction.

9. The vehicle control device according to claim 1, wherein the control unit is configured to acquire the physical quantity relating to the behavior of the vehicle at a time when the physical quantity relating to the speed falls below a predetermined speed when the vehicle is to be decelerated based on the physical quantity relating to the target braking force.

10. The vehicle control device according to claim 9, wherein the control unit is configured to avoid the correction of the control command:
when a deceleration of the vehicle at the time when the physical quantity relating to the speed falls below the predetermined speed is equal to or larger than a predetermined value;
when a physical quantity relating to a stroke of a brake pedal at the time when the physical quantity relating to the speed falls below the predetermined speed fluctuates by a predetermined quantity or more; or
when a steering amount at the time when the physical quantity relating to the speed falls below the predetermined speed is equal to or larger than a predetermined value of a steering amount.

11. A vehicle control device, which is provided in a vehicle including a friction braking device configured to generate a friction braking force in the vehicle and an electric motor configured to generate a driving force in the vehicle, the vehicle control device comprising:
a speed acquisition unit configured to acquire a speed of the vehicle;
a target braking force calculation unit configured to obtain a target braking force based on an operation amount of a brake pedal of the vehicle;
a vehicle behavior acquisition unit configured to acquire a jerk and an acceleration of the vehicle at a moment of stopping at which the speed of the vehicle falls below a predetermined speed;
a driving force calculation unit configured to obtain a driving force to be generated by the electric motor at the moment of stopping;
a determination unit configured to determine that an actual braking force is larger than the target braking force and the driving force is insufficient when a maximum value of the jerk is equal to or larger than a predetermined threshold value, and to determine that the actual braking force is smaller than the target braking force and the driving force is excessive when the maximum value of the jerk is smaller than the predetermined threshold value and a fluctuation width of the acceleration exceeds a predetermined fluctuation range; and
a driving force correction unit configured to correct the driving force toward a direction for increasing the driving force from a previous value obtained by the driving force calculation unit when the driving force is determined to be insufficient, and to correct the driving force toward a direction for reducing the driving force from the previous value obtained by the driving force calculation unit when the driving force is determined to be excessive.

12. A vehicle control method to be executed by a control unit in a vehicle including a friction braking device configured to generate a friction braking force in the vehicle and a driving device configured to generate a driving force in the vehicle,
the vehicle control method comprising:
acquiring a physical quantity relating to a speed of the vehicle;
acquiring a physical quantity relating to a target braking force required to decelerate the vehicle;
acquiring a physical quantity relating to a behavior of the vehicle at a time when the physical quantity relating to the speed falls below a predetermined speed when the vehicle is to be decelerated based on the physical quantity relating to the target braking force; and
correcting, based on the physical quantity relating to the behavior of the vehicle, a control command to be output in order to generate the driving force by the driving device under a state in which the friction braking force is being generated.

13. A vehicle control system, comprising:
a friction braking device configured to generate a friction braking force in a vehicle;
a driving device configured to generate a driving force in the vehicle; and
a control device including a control unit configured to output a result of calculation based on input information,
wherein the control device is configured to:
acquire a physical quantity relating to a speed of the vehicle;
acquire a physical quantity relating to a target braking force required to decelerate the vehicle;
acquire a physical quantity relating to a behavior of the vehicle at a time when the physical quantity relating to the speed falls below a predetermined speed when the vehicle is to be decelerated based on the physical quantity relating to the target braking force; and
correct, based on the physical quantity relating to the behavior of the vehicle, a control command to be output in order to generate the driving force by the driving device under a state in which the friction braking force is being generated.
